# DEMANDE DE BREVET EUROPEEN

(11) **EP 4 147 608 A1**
(43) Date de publication de la demande: **15.03.2023**
(21) Numéro de dépôt: 22195197.3
(22) Date de dépôt: 12.09.2022
(51) Int. Cl.: A47J 19/02, A47J 43/07

(54) **DISPOSITIF D'INTRODUCTION D'ALIMENTS SECURISE ET APPAREIL DE PREPARATION CULINAIRE COMPORTANT UN TEL DISPOSITIF**

(30) Priorité: 13.09.2021 FR 2109587
(71) Demandeur: SEB S.A., 69130 Ecully (FR)
(72) Inventeur: RAGOT, Didier, 69134 ECULLY CEDEX (FR); FERRON, Jean-Baptiste, 69134 ECULLY CEDEX (FR)
(74) Mandataire: SEB Développement

(57) **Abrégé**

L'invention concerne un dispositif (1) d'introduction d'aliments d'un appareil (100) 5 de préparation culinaire. L'appareil comprend une enceinte de travail (106) dans laquelle est logé un outil rotatif (102). Ledit dispositif (1) comprend une goulotte (4) d'introduction d'aliments qui débouche sur une ouverture supérieure (6) d'introduction des aliments et sur l'enceinte de travail (106) en mode d'utilisation dudit appareil. Ladite goulotte (4) comprend un tronçon supérieur (8) muni de 10 l'ouverture supérieure (6), une trappe (7) creuse et montée en liaison pivot d'axe X1 vis-à-vis du tronçon supérieur (8). La trappe (7) présente une forme de révolution autour de l'axe X1, ladite trappe (7) étant placée dans le tronçon supérieur (8) et débordant de celui-ci par l'ouverture supérieure (6), ladite forme de révolution épousant la forme de l'ouverture supérieure (6) qui présente une 15 symétrie par rapport à un plan P1 passant par l'axe X1. Ladite trappe (7) présente une ouverture angulaire (10) autour de l'axe X1 qui présente un angle α compris entre soixante et cent-cinquante degrés (60° ≤ α ≤ 150°)

## Description

### Domaine technique

La présente invention concerne les appareils de préparation culinaire comprenant un outil rotatif agencé dans une enceinte de travail et un dispositif d'introduction d'aliments muni d'une goulotte d'acheminement des aliments jusqu'à l'enceinte de travail.

L'invention porte tout particulièrement sur le dispositif d'introduction d'aliments d'un tel appareil, lequel comporte un système de sécurité qui empêche l'accès avec les mains à l'outil rotatif en passant par la goulotte d'acheminement, tout en permettant l'introduction d'aliments entiers de forme plus ou moins sphérique, tels que des pommes, des poires ou des tomates, par exemple.

Une mise en œuvre particulière d'un tel appareil concerne un pressoir pour la préparation de jus de fruits et/ou légumes.

### Etat de la technique

Les appareils de préparation culinaire du type pressoir sont bien connus. Un tel appareil comprend un corps définissant une enceinte de travail et un dispositif d'introduction d'aliments muni d'une goulotte d'introduction d'aliments. Un outil rotatif du type vis de pressage est logé dans l'enceinte de travail. La goulotte comprend une première ouverture pour l'introduction des aliments et un conduit d'acheminement des aliments jusqu'à l'enceinte de travail. La première ouverture et le conduit sont dimensionnés pour permettre l'insertion de fruits et/ou légumes entiers ou coupés en gros morceaux.

Afin d'éviter que l'utilisateur insert une de ses mains dans le conduit, par exemple pour pousser les aliments, le dispositif d'introduction d'aliments sur un tel appareil est généralement équipé d'un système de sécurité. Certaines mises en œuvre de systèmes de sécurité sont décrites dans les titres publiés sous les numéros suivants: CN104957958A ; CN108670001A ; CN205018783U ; CN205903154U ; CN206080058U ; CN207653992U ; CN208388382U ; CN208435206U ; CN208481071U ; CN208551042U ; CN208837577U ; CN208925801U ; CN209284899U ; CN209284903U ; WO2015009015A1. Selon ces mises en œuvre, le système de sécurité comprend une trappe formant une cuvette munie d'une seconde ouverture et montée pivotante pour positionner la seconde ouverture à l'extérieur de la goulotte, afin de rendre accessible cette seconde ouverture et d'introduire l'aliment entier ou en gros morceau dans la cuvette, puis pour pivoter la cuvette de sorte à orienter la seconde ouverture vers le bas en regard de la première ouverture précitée et permettre la chute par gravité de l'aliment dans le conduit.

La demanderesse observe que ces divers systèmes de sécurité ne sont pas optimaux, un accès au conduit de la goulotte d'introduction d'aliments demeurant possible dans certaines positions de la cuvette.

### Résumé de l'invention

La présente invention met en œuvre une alternative de conception d'un système de sécurité sur le dispositif d'introduction d'aliments qui s'apparente à ceux décrits dans les titres antérieurs précités, en empêchant toutefois toute possibilité d'introduction d'un objet, par exemple une cuillère ou un couteau, ou d'un membre, notamment une main, à l'intérieur du conduit d'introduction d'aliments.

A ce titre, l'invention concerne tout d'abord un dispositif d'introduction d'aliments d'un appareil de préparation culinaire, ledit appareil comprenant une enceinte de travail dans laquelle est logé un outil rotatif, par exemple une vis de pressage permettant d'extraire du jus des aliments ou des couteaux rotatifs permettant de hacher ou broyer des aliments. Selon l'invention, le dispositif d'introduction d'aliments comprend une goulotte d'introduction d'aliments qui débouche à une extrémité supérieure sur une ouverture supérieure permettant d'introduire les aliments et à une extrémité inférieure sur l'enceinte de travail, en mode d'utilisation dudit appareil de préparation culinaire, c'est-à-dire lorsque ledit dispositif d'introduction d'aliments est placé sur une base dudit appareil de préparation culinaire, comme cela sera décrit dans la suite de la description. La goulotte d'introduction d'aliments comprend un tronçon supérieur muni de ladite ouverture supérieure. Selon l'invention, le dispositif d'introduction d'aliments comprend une trappe creuse et montée en liaison pivot d'axe X1 vis-à-vis du tronçon supérieur. La trappe présente une forme de révolution autour de l'axe X1. La trappe est placée dans le tronçon supérieur et déborde de celui-ci par l'ouverture supérieure, ladite forme de révolution de la trappe épousant la forme de l'ouverture supérieure qui présente une symétrie par rapport à un plan P1 passant par l'axe X1. En outre, selon l'invention, la trappe présente une ouverture angulaire autour de l'axe X1 qui présente un angle α compris entre soixante et cent-cinquante degrés (60° ≤ α ≤ 150°). La mise en œuvre d'une telle ouverture angulaire sur la trappe permet d'empêcher l'introduction d'un objet, par exemple une cuillère ou un couteau, ou d'un membre, notamment une main, par l'ouverture supérieure afin de l'insérer à l'intérieur du conduit d'introduction d'aliments, quelle que soit la position angulaire de pivotement de la trappe autour de l'axe X1. La présence de cette ouverture angulaire sur la trappe qui est creuse permet à ladite trappe de former une cuvette pour y loger des aliments en entier ou en gros morceaux.

Selon une première réalisation du dispositif d'introduction d'aliments, l'angle α est compris entre soixante-dix et cent-vingt degrés (70° ≤ α ≤ 120°). Selon une seconde réalisation du dispositif d'introduction d'aliments, l'angle α est compris entre soixante-quinze et quatre-vingt-dix degrés (75° ≤ α ≤ 90°). Selon une troisième réalisation du dispositif d'introduction d'aliments, préférentielle, l'angle α est compris entre quatre-vingts et quatre-vingt-cinq degrés (80° ≤ α ≤ 85°). Le choix de cet angle α jouera sur la taille des aliments pouvant être insérer en entier ou en gros morceaux dans la trappe formant une cuvette. Le choix d'un angle α est compris entre quatre-vingts et quatre-vingt-cinq degrés (80° ≤ α ≤ 85°) permet d'introduire notamment des fruits entiers tels que des pommes ou des poires.

Selon une réalisation du dispositif d'introduction d'aliments objet de l'invention, la trappe a un profil comportant deux côtés latéraux plats reliés entre eux par une partie en demi-cercle. En d'autres termes, la trappe se présente comme une roue avec deux flancs latéraux et une bande de roulement. Selon cette réalisation, de préférence, les deux côtés latéraux sont distants l'un de l'autre d'une largeur L1 comprise entre quatre-vingts et quatre-vingt-quinze millimètres (80 mm ≤ L1 ≤ 95 mm). De préférence, la largeur L1 est égale à quatre-vingt-dix millimètres (L1 = 90 mm). Selon cette réalisation, de préférence, la trappe présente dans un plan de coupe médian P2 un diamètre D1 compris entre cent-soixante millimètres et cent-quatre-vingt-dix millimètres (160mm ≤ D1 ≤ 190 mm). De préférence, ce diamètre D1 est égal à cent-quatre-vingts millimètres (D1 = 180 mm). Des variantes de réalisation de la trappe sont possibles dans le cadre de l'invention ; la trappe pourrait notamment présenter la forme d'un cylindre de faible longueur voire d'une sphère, présentant ladite ouverture angulaire.

Selon une réalisation du dispositif d'introduction d'aliments objet de l'invention, la trappe comprend un organe de butée venant en appui contre un bord supérieur délimitant l'ouverture supérieure de sorte à limiter la rotation de la trappe autour de l'axe X1 dans un sens de rotation et dans l'autre sens de rotation et définir une position de déversement de l'aliment selon laquelle l'ouverture angulaire communique avec la goulotte et une position de chargement de l'aliment selon laquelle l'ouverture angulaire est disposée hors de la goulotte. Une variante sans cet organe de butée est également possible, auquel cas la trappe peut tourner librement à 360° autour de l'axe X1.

Selon l'invention, le dispositif d'introduction d'aliments comprend un système de montage en liaison pivot de la trappe sur le tronçon supérieur selon l'axe X1. Ce système de montage en liaison pivot de la trappe est structurellement conçu pour empêcher le dégagement de ladite trappe hors de la goulotte. Cela empêche le retrait de la trappe durant l'usage et, ainsi, renforce la sécurité du dispositif d'introduction d'aliments.

L'invention concerne aussi un appareil de préparation culinaire comprenant un réceptacle, un outil rotatif agencé dans le réceptacle et un dispositif d'introduction d'aliments comportant un couvercle prévu pour fermer le réceptacle. En outre, le dispositif d'introduction d'aliments comprend l'une et/ou l'autre des caractéristiques précitées. Selon une forme de réalisation préférée, un mécanisme d'assemblage à baïonnette est agencé entre le réceptacle et le dispositif d'introduction d'aliments, la mise en place dudit dispositif d'introduction d'aliments sur le réceptacle permettant de définir l'enceinte de travail dans laquelle est logé l'outil rotatif.

Selon une réalisation, l'appareil de préparation culinaire est un pressoir, également appelé extracteur de jus, l'outil rotatif étant une vis de pressage permettant d'extraire du jus des aliments, notamment des fruits et/ou légumes. La vis de pressage est agencée dans un filtre logé dans le réceptacle.

On pourrait envisager d'autres appareils de préparation culinaire dans le cadre de l'invention, par exemple un appareil pour hacher ou broyer les aliments, l'outil rotatif étant alors constitué de couteaux rotatifs.

### Brève description des figures

La description suivante met en évidence les caractéristiques et avantages de la présente invention. Cette description s'appuie sur des figures, parmi lesquelles :
[Fig. 1] La figure 1 illustre une vue d'ensemble d'un dispositif d'introduction d'aliments selon l'invention ;
[Fig. 2] La figure 2 illustre une vue de dessus du dispositif d'introduction d'aliments de la figure 1 ;
[Fig. 3] La figure 3 illustre une vue de côté en coupe du dispositif d'introduction d'aliments de la figure 1 ;
[Fig. 4] La figure 4 illustre un exemple de mise en œuvre d'un système de liaison pivot entre une trappe et un tronçon supérieur d'une goulotte sur le dispositif d'introduction d'aliments ;
[Fig. 5] La figure 5 illustre un appareil de préparation culinaire de type pressoir à jus, lequel comprend un dispositif d'introduction d'aliments selon l'invention ;

### Description détaillée

Dans la suite de la description, le terme appareil est utilisé pour désigner un appareil de préparation culinaire comportant un dispositif d'introduction d'aliments selon l'invention, sans indication contraire. De même, le terme dispositif est utilisé pour désigner le dispositif d'introduction d'aliments selon l'invention.

Dans la suite de la description, les termes « horizontal », « vertical », « inférieur », « supérieur », « longitudinal », « transversal », « haut », « bas », « gauche », « droite » ... qui pourraient être employés, le seront en considération de la position de l'appareil reposant sur un plan de travail, en situation d'usage, avec le dispositif d'introduction d'aliments en place sur ledit appareil, disposé face à l'utilisateur.

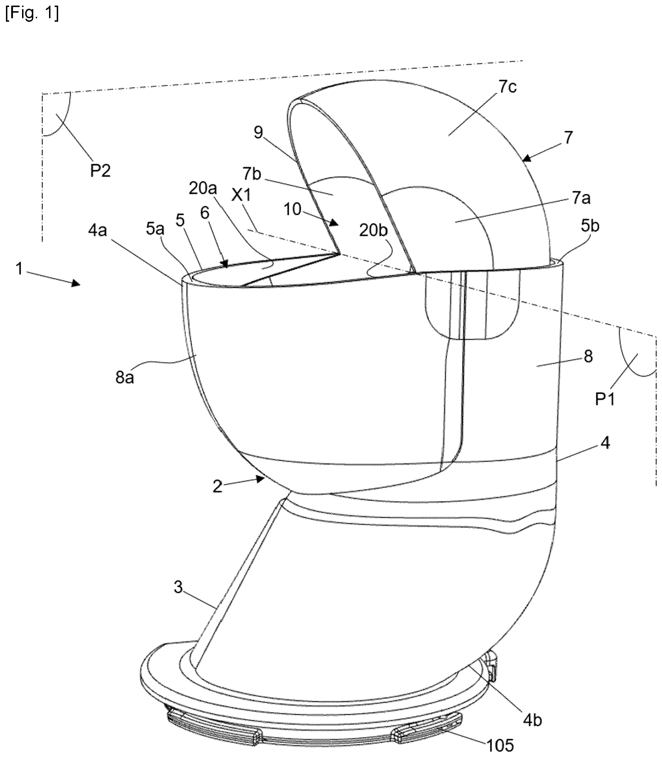

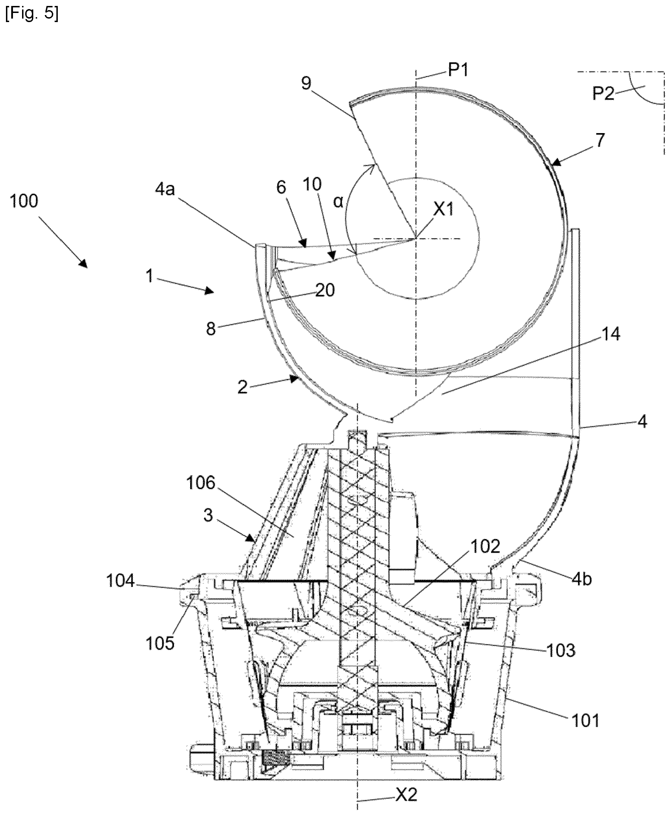

Au regard des figures 1 à 4, le dispositif 1 comprend un corps 2 comportant un tronçon inférieur 2a et un tronçon supérieur 2b. Le dispositif 1 comprend un couvercle 3 prévu pour fermer un réceptacle 101 (figure 5), le tronçon inférieur 2a du corps 2 étant issu du couvercle 3. Le corps 2 définit une goulotte 4 pour l'introduction des aliments. Cette goulotte 4 comprend à une extrémité supérieure 4a un bord supérieur 5 qui définit une ouverture supérieure 6 permettant d'introduire des aliments dans cette goulotte 4. Cette goulotte 4 comprend également une extrémité inférieure 4b qui communique avec une face inférieure 3a du couvercle 3.

Au regard des figures 1 à 3, notamment, le dispositif 1 comprend une trappe 7 qui est creuse et montée en liaison pivot d'axe X1 vis-à-vis d'un tronçon supérieur 8 de la goulotte 4, ledit tronçon supérieur 8 étant muni de l'ouverture supérieure 6. La trappe 7 présente une forme de révolution autour de l'axe X1, hormis dans une portion angulaire dans laquelle cette forme de révolution présente une découpe angulaire 9 formant une ouverture angulaire 10 autour de l'axe X1 sur ladite trappe 7. Cette ouverture angulaire 10 présente un angle α qui est de préférence compris entre quatre-vingts et quatre-vingt-cinq degrés (80° ≤ α ≤ 85°), mais cet angle α pourrait éventuellement être compris entre soixante-quinze et quatre-vingt-dix degrés (75° ≤ α ≤ 90°). Afin d'accepter des aliments plus volumineux, il serait encore possible de prévoir un angle α compris entre soixante-dix et cent-vingt degrés (70° ≤ α ≤ 120°) voire, à la limite, entre soixante et cent-cinquante degrés (60° ≤ α ≤ 150°), sans risquer qu'un utilisateur puisse introduire un objet tel qu'une cuillère, une fourchette ou un couteau, ou une main à l'intérieur de la goulotte 4, en passant par l'ouverture supérieure 6.

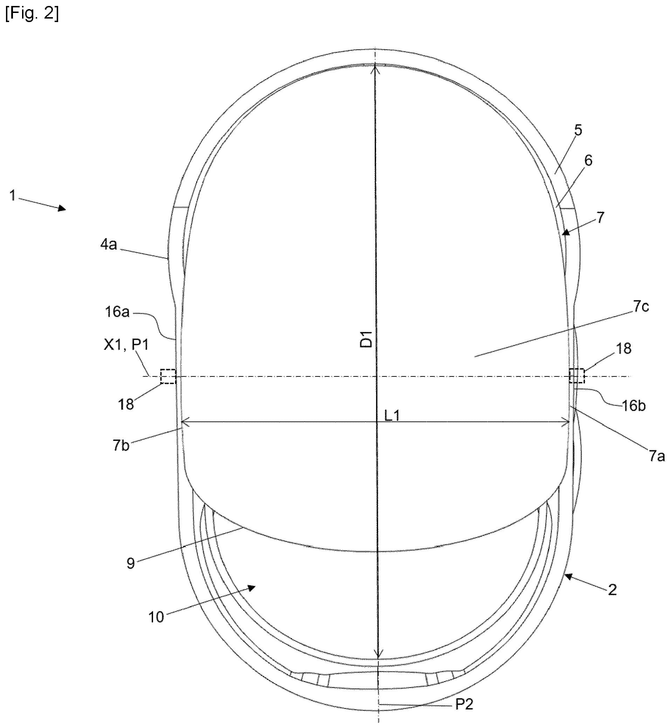

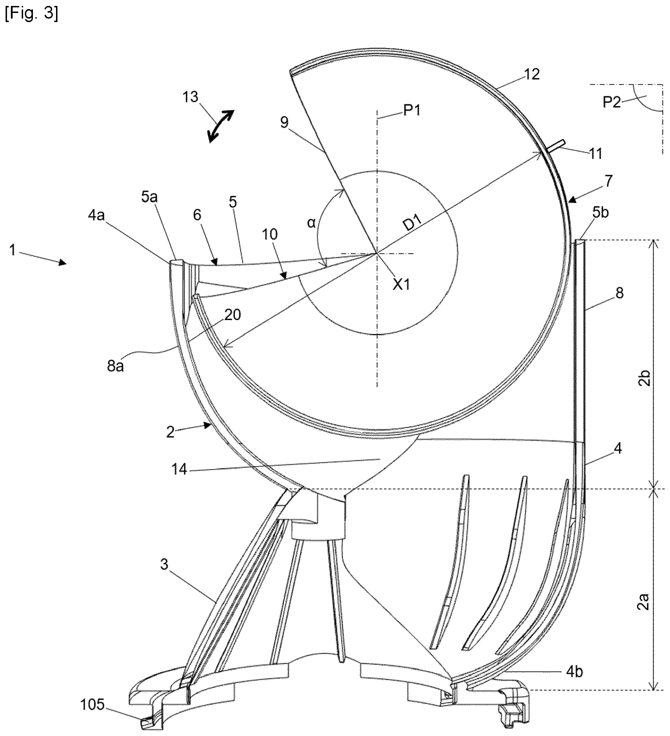

Au regard des figures 1 à 3, notamment, la trappe 7 est placée dans le tronçon supérieur 8 de la goulotte 4 et déborde à l'extérieur de celui-ci, par l'ouverture supérieure 6. Comme l'illustre la figure 2, l'ouverture supérieure 6 présente plus ou moins une forme ovale ou une forme de haricot qui présente une symétrie par rapport à un plan P1 vertical et passant par l'axe X1. La trappe 7 présente un profil général - hormis dans la zone de la découpe angulaire 9 - comportant deux côtés latéraux plats 7a, 7b, en forme de disque, ces côtés latéraux plats 7a, 7b étant reliés entre eux par une partie en demi-cercle 7c, de sorte à définir ladite forme de révolution qui épouse la forme de l'ouverture supérieure 6, comme le montre la figure 2. Les deux côtés latéraux 7a, 7b de la trappe 7 sont distants l'un de l'autre d'une largeur L1 comprise entre quatre-vingts et quatre-vingt-quinze millimètres (80 mm ≤ L1 ≤ 95 mm), cette largeur L1 étant de préférence égale à quatre-vingt-dix millimètres (L1 = 90 mm) et parfaitement adapter pour recevoir des fruits entiers tels que des pommes ou des poires, par exemple. Comme le montrent les figures 2 et 3, la trappe 7 présente dans un plan de coupe médian P2 un diamètre D1 compris entre cent-soixante millimètres et cent-quatre-vingt-dix millimètres (160 mm ≤ D1 ≤ 190 mm), ce diamètre D1 étant de préférence égal à cent-quatre-vingts millimètres (D1 = 180 mm).

Selon une réalisation du dispositif 1, tel que l'illustre la figure 3, la trappe 7 comprend un organe de butée 11 qui est agencé sur la face externe 12 de la partie en demi-cercle 7c, au milieu de celle-ci, c'est-à-dire dans le plan médian P2, de sorte à se déplacer autour de l'axe X1 lors de la rotation de la trappe 7 et à venir en appui contre le bord supérieur 5 délimitant l'ouverture supérieure 6. Cet organe de butée 11 permet de limiter la rotation de la trappe 7 autour de l'axe X1 dans les deux sens de rotation définis par la double-flèche 13. Lorsque l'organe de butée 11 pivote vers l'avant et vient en appui sur la partie avant 5a du bord supérieur 5, la trappe 7 est dans une position de déversement de l'aliment selon laquelle l'ouverture angulaire 10 communique avec la zone interne 14 de la goulotte 4, ce qui permet à l'aliment de sortir de la trappe 7 par l'ouverture angulaire 10, pour tomber par gravité dans ladite zone interne 14 jusqu'à atteindre l'enceinte de travail 106. Lorsque l'organe de butée 11 pivote vers l'arrière et vient en appui contre la partie arrière 5b du bord supérieur 5, la trappe 7 est dans une position de chargement de l'aliment selon laquelle l'ouverture angulaire 10 est disposée hors de la goulotte 2 et permet l'introduction d'un aliment à l'intérieur de ladite trappe 7, par l'ouverture angulaire 10.

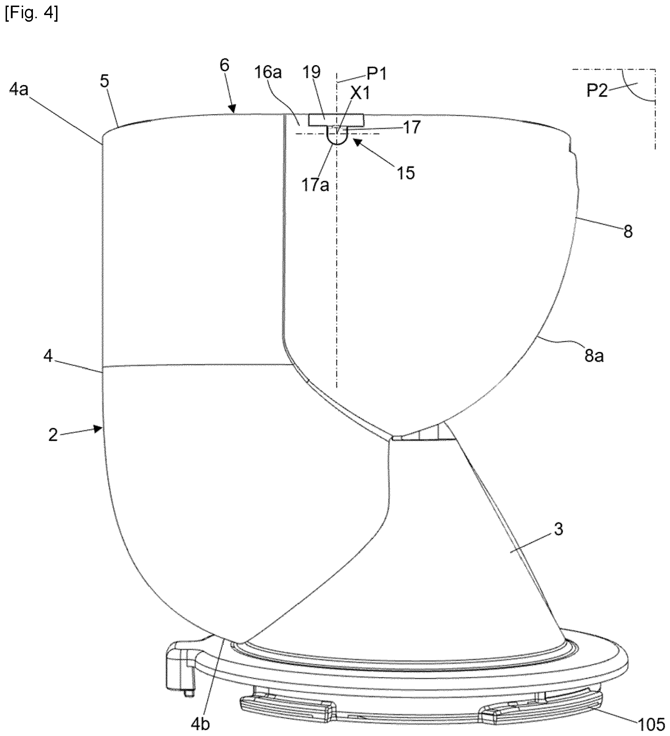

Le dispositif 1 comprend un système de montage en liaison pivot 15 de la trappe 7 sur le tronçon supérieur 8, selon l'axe X1. Ce système de montage en liaison pivot 15 est structurellement conçu pour empêcher le dégagement de ladite trappe 7 hors de la goulotte 4. Sur la figure 4, ce système de montage en liaison pivot 15 comprend sur chacun des côtés latéraux 16a, 16b (voir figure 2) du tronçon supérieur 8 de la goulotte 4, une encoche 17 dont une portion 17a est circulaire de manière à former un palier recevant un plot cylindrique 18 (schématisé sur la figure 2) agencé sur chacun des côtés latéraux plats 7a, 7b de la trappe 7, dans l'axe X1. Une pièce de maintien 19 vient fermer l'encoche 17 une fois le plot cylindrique 18 introduit dans la portion 17a de cette encoche 17, la pièce de maintien 19 étant fixée sur le tronçon supérieur 8, par exemple par vissage, par emboîtement en force ou par encliquetage en force. Des variantes pourraient être envisagées de ce système de montage en liaison pivot 15, par exemple en prévoyant des plots cylindriques similaire aux plots cylindriques 18 sur les côtés latéraux plats 7a, 7b de la trappe 7, lesquels viendraient s'encliqueter en force directement dans des logements cylindriques (non illustrés) agencés sur les faces internes latérales 20a, 20b (voir figure 1) du tronçon supérieur 8 de la goulotte 4, dans l'axe X1.

La partie avant 8a du tronçon supérieur 8 présente une forme incurvée, comme le montrent notamment les figures 1, 3 et 4, celle-ci épousant la forme de la partie en demi-cercle 7c de la trappe 7 logée dans ledit tronçon supérieur 8. Ainsi, lorsque la trappe 7 passe de la position de chargement à la position de déversement, et inversement, et que l'ouverture angulaire 10 se trouve à cheval entre l'extérieur et l'intérieur de la goulotte 4, ladite ouverture angulaire 10 demeure proche de la face interne 20 dudit tronçon supérieur 8, ce qui contribue à préserver la zone interne 14 de la goulotte 4 de tout accès avec un objet ou une main.

Au regard de la figure 5, le dispositif 1 selon l'invention constitue une pièce d'un appareil 100 qui comporte un réceptacle 101 et un outil rotatif 102 tournant selon un axe de rotation vertical X2. Sur cette figure 5, l'appareil 100 est un extracteur de jus, également appelé pressoir, l'outil rotatif 102 étant une vis de pressage agencée dans un filtre 103 logé dans le réceptacle 101. D'autres outils rotatifs pourraient être envisagés, tels que des couteaux rotatifs d'un appareil du type hachoir ou mixeur. Le couvercle 3 du dispositif 1 se fixe sur une partie supérieure 104 du réceptacle 101 grâce à un mécanisme d'assemblage à baïonnette 105, bien connu sur les appareils de préparation culinaire. La fixation du couvercle 3 sur le réceptacle 101, au-dessus de l'outil rotatif 102, permet de constituer une enceinte de travail 106 incorporant ledit outil rotatif 102, l'extrémité inférieure 4b de la goulotte 4 débouchant sur cette enceintre de travail 106. Ainsi durant l'usage, l'introduction d'aliments en entier ou en morceaux par l'ouverture supérieure 6 de la goulotte 4 permet leur descente jusqu'à l'extrémité inférieure 4b de cette goulotte 4, lesdits aliments tombant alors par gravité dans l'enceinte de travail 106 où ils sont traités au moyen de l'outil de rotatif 102 durant sa rotation selon l'axe vertical X2, le jus extrait des aliments se déversant dans le réceptacle 101 pouvant présenter une sortie pour le jus, tandis que la matière sèche reste à l'intérieur du filtre 103 ou est évacuée par une autre sortie pour les résidus. L'appareil 100 pourrait être d'un autre type, par exemple un hachoir, sur le même principe de fonctionnement que celui décrit précédemment pour l'extracteur de jus.

La présente invention n'est nullement limitée aux exemples de réalisation décrits et à leurs variantes, mais englobe de nombreuses modifications dans le cadre des revendications.

## Revendications

1. Dispositif (1) d'introduction d'aliments d'un appareil (100) de préparation culinaire, ledit appareil (100) comprenant une enceinte de travail (106) dans laquelle est logé un outil rotatif (102), le dispositif (1) d'introduction d'aliments comprenant :
- une goulotte (4) d'introduction d'aliments qui débouche à une extrémité supérieure (4a) sur une ouverture supérieure (6) permettant d'introduire les aliments et à une extrémité inférieure (4b) sur l'enceinte de travail (106) en mode d'utilisation dudit appareil de préparation culinaire, la goulotte (4) d'introduction d'aliments comprenant un tronçon supérieur (8) muni de ladite ouverture supérieure (6),
- une trappe (7) creuse et montée en liaison pivot d'axe X1 vis-à-vis du tronçon supérieur (8), la trappe (7) présentant une forme de révolution autour de l'axe X1, ladite trappe (7) étant placée dans le tronçon supérieur (8) et débordant de celui-ci par l'ouverture supérieure (6), ladite forme de révolution épousant la forme de l'ouverture supérieure (6) qui présente une symétrie par rapport à un plan P1 passant par l'axe X1, **caractérisé en ce que** la trappe (7) présente une ouverture angulaire (10) autour de l'axe X1 qui présente un angle α compris entre soixante et cent-cinquante degrés (60° ≤ α ≤ 150°).

2. Dispositif (1) d'introduction d'aliments selon la revendication 1, **caractérisé en ce que** l'angle α est compris entre soixante-dix et cent-vingt degrés (70° ≤ α ≤ 120°).

3. Dispositif (1) d'introduction d'aliments selon l'une quelconque des revendications 1 ou 2, **caractérisé en ce que** l'angle α est compris entre soixante-quinze et quatre-vingt-dix degrés (75° ≤ α ≤ 90°).

4. Dispositif (1) d'introduction d'aliments selon l'une quelconque des revendications 1 à 3, **caractérisé en ce que** l'angle α est compris entre quatre-vingts et quatre-vingt-cinq degrés (80° ≤ α ≤ 85°).

5. Dispositif (1) d'introduction d'aliments selon l'une quelconque des revendications 1 à 4, caractérisé en que la trappe (7) a un profil comportant deux côtés latéraux plats (7a, 7b) reliés entre eux par une partie en demi-cercle (7c).

6. Dispositif (1) d'introduction d'aliments selon la revendication 5, **caractérisé en ce que** les deux côtés latéraux (7a, 7b) sont distants l'un de l'autre d'une largeur L1 comprise entre quatre-vingts et quatre-vingt-quinze millimètres (80 mm ≤ L1 ≤ 95 mm).

7. Dispositif (1) d'introduction d'aliments selon la revendication 6, **caractérisé en ce que** la largeur L1 est égale à quatre-vingt-dix millimètres (L1 = 90 mm).

8. Dispositif (1) d'introduction d'aliments selon l'une quelconque des revendications 5 à 7, **caractérisé en ce que** la trappe (7) présente dans un plan de coupe médian P2 un diamètre D1 compris entre cent-soixante millimètres et cent-quatre-vingt-dix millimètres (160 mm ≤ D1 ≤ 190 mm).

9. Dispositif (1) d'introduction d'aliments selon la revendication 8, **caractérisé en ce que** le diamètre D1 est égal à cent-quatre-vingts millimètres (D1 = 180 mm)

10. Dispositif (1) d'introduction d'aliments selon l'une quelconque des revendications 1 à 9, **caractérisé en ce que** la trappe (7) comprend un organe de butée (11) venant en appui contre un bord supérieur (5) délimitant l'ouverture supérieure (6) de sorte à limiter la rotation de la trappe (7) autour de l'axe X1 dans un sens de rotation et dans l'autre sens de rotation et définir une position de déversement de l'aliment selon laquelle l'ouverture angulaire (10) communique avec la goulotte (4) et une position de chargement de l'aliment selon laquelle l'ouverture angulaire (10) est disposée hors de la goulotte (4).

11. Dispositif (1) d'introduction d'aliments selon l'une quelconque des revendications 1 à 10, **caractérisé en ce qu'**il comprend un système de montage en liaison pivot (15) de la trappe (7) sur le tronçon supérieur (8) selon l'axe X1, structurellement conçu pour empêcher le dégagement de ladite trappe (7) hors de la goulotte (4).

12. Appareil (100) de préparation culinaire comprenant un réceptacle (101), un outil rotatif (102) agencé dans le réceptacle (101) et un dispositif (1) d'introduction d'aliments comportant un couvercle (3) prévu pour fermer le réceptacle (101), **caractérisé en ce que** le dispositif (1) d'introduction d'aliments est conforme à l'une au moins des revendications 1 à 11.

13. Appareil (100) selon la revendication 12, dans lequel l'outil rotatif (102) est une vis de pressage permettant d'extraire du jus des aliments.
